# EUROPEAN PATENT SPECIFICATION

(11) **EP 0 713 039 B1**
(45) Date of publication and mention of the grant of the patent: **22.03.2000**
(21) Application number: 95203020.3
(22) Date of filing: 07.11.1995
(51) Int. Cl.: F16L 3/123, F16L 55/033

(54) **Fixing bracket for pipes, and method for the production thereof**
Rohrschelle und Verfahren zu deren Herstellung
Collier de serrage pour tuyaux et son procédé de fabrication

(30) Priority: 16.11.1994 NL 9401910
(43) Date of publication of application: 22.05.1996
(73) Proprietor: FLAMCO B.V., NL-2802 AC Gouda (NL)
(72) Inventor: Holleboom, René Gaston, NL-2274 XV Voorburg (NL); Jaspers, Antonius Nicolaas Johannes, NL-2804 PH Gouda (NL)
(74) Representative: Iemenschot, Johannes Andreas, Ir.

(56) References cited:
- EP-A- 0 057 373
- EP-A- 0 602 456
- US-A- 2 310 622
- US-A- 2 338 031
- US-A- 2 387 295

## Description

The invention relates to a fixing bracket for pipes according to the preamble of claim 1.

A fixing bracket of this type is disclosed in US-A-2 310 622.

The known fixing bracket comprises a one-part bracket body. The bent-over side edges of the bracket body extend at right angles to the centre part of the bracket body.

The object of the invention is to provide an improved fixing bracket in which the covering is firmly clamped between the bent-over side edges of the bracket body. This object is achieved with a fixing bracket according to claim 1.

The invention also relates to a method for producing a fixing bracket according to the invention.

With this method the fixing bracket can be produced in an easy way.

The invention will be explained in greater detail with reference to the following exemplary embodiment shown in the drawing, in which:
Fig. 1 is a side view of a particular embodiment of a fixing bracket according to the invention;
Fig. 2 is a cross-section of the fixing bracket of Fig. 1, along the line II-II in Fig. 1;
Fig. 3 is a cross-section similar to the cross-section of Fig. 2, with a different design of strip-shaped covering;
Figs. 4 and 5 are a top view and side view of the strips of material from which the bracket body of the fixing bracket of Fig. 1 is produced;
Figs. 6 to 9 show the successive steps for producing a fixing bracket according to Fig. 1;
Fig. 10 is a section along the line X-X in Fig. 7; and
Fig. 11 shows diagrammatically in cross-section the last step of the method.

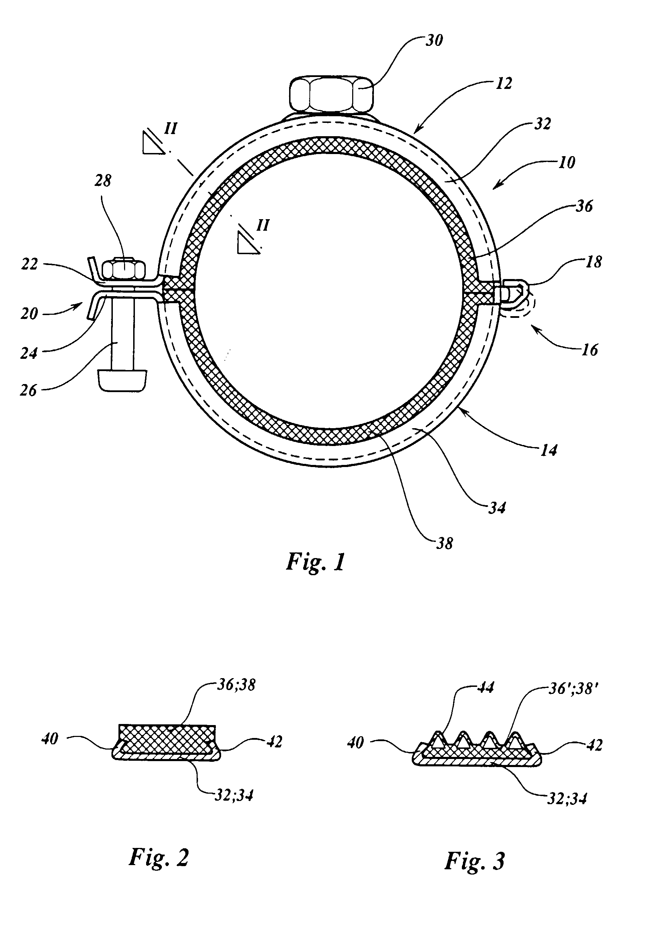

Fig. 1 shows a particular embodiment of a fixing bracket for round pipes, indicated in its entirety by reference number 10. The bracket 10 is composed of a first bracket part 12 and a second bracket part 14, which two bracket parts are a semi-circular shape. The two bracket parts 12 and 14 are hingedly connected to each other at 16. To this end, the first bracket part 12 is provided with an eye 18, which is hooked through an opening which is formed near 16 in the end of the second bracket part 14 and runs in the transverse direction. At the other side, at 20, the two bracket parts 12 and 14 are provided with flanges 22 and 24 respectively which are bent radially outwards, and said bracket parts can be connected to each other there in situ by means of a screw connection formed by a screw 26 and a nut 28. The screw 26 in this case projects through holes in the flanges 22 and 24. The nut 28 can be connected movably or immovably to the first bracket part 12. In general, any screw connection suitable for the purpose can be used as the screw connection.

A nut 30 is fixed to the first bracket part 12, for example by welding. A threaded rod can be screwed into this nut 30, by means of which rod the bracket 10 can be fixed to a ceiling or wall.

Each bracket part 12, 14 comprises a bracket body part 32, 34 and a strip-shaped covering part 36, 38 made of elastomeric material fitted on the inside facing the pipe accommodated in the bracket during use of the bracket. The bracket body parts 32, 34 together form a bracket body, and the strip-shaped covering parts together form a strip-shaped covering.

As shown in Fig. 2, the side edges 40 and 42 of the bracket body parts 32, 34 are bent towards the inside of the bracket, and are also bent towards each other in the transverse direction of the bracket body. The parts 36 and 38 of the strip-shaped covering are clamped in the transverse direction between the side edges of the bracket body parts 32, 34 bent towards each other. In Fig. 2 the strip-shaped covering 36, 38 has an essentially rectangular cross-section.

An alternative embodiment of the strip-shaped covering 36', 38' is shown in Fig. 3. In this embodiment the covering is provided with hollow ribs 44 on the inside. This strip-shaped covering is also clamped between the side edges 40 and 42 of the bracket body parts 32 and 34.

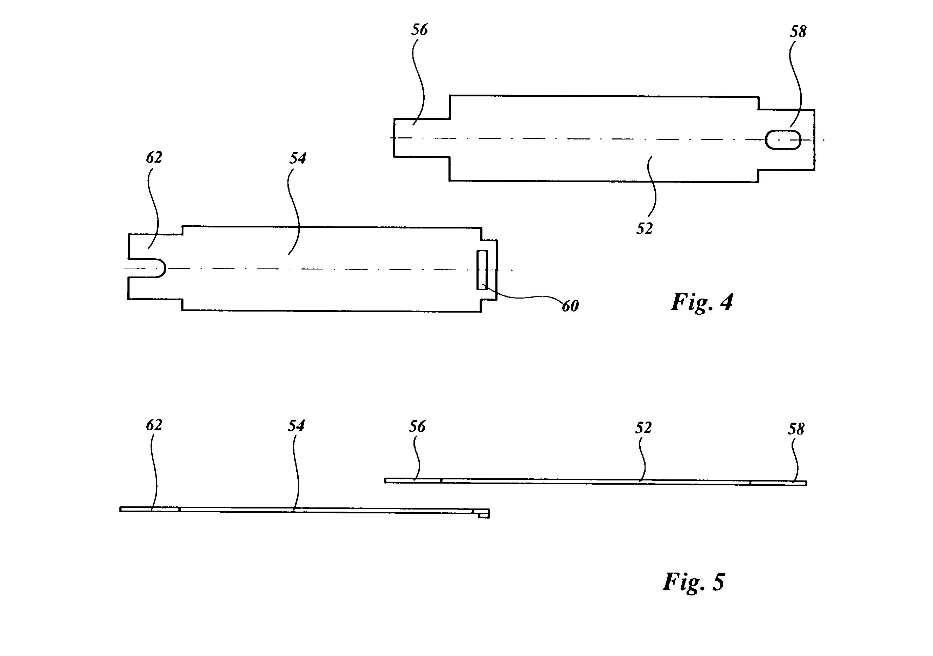

Figs. 4 and 5 show the strips of material from which the bracket body 36, 38 of the fixing bracket of Fig. 1 is made.

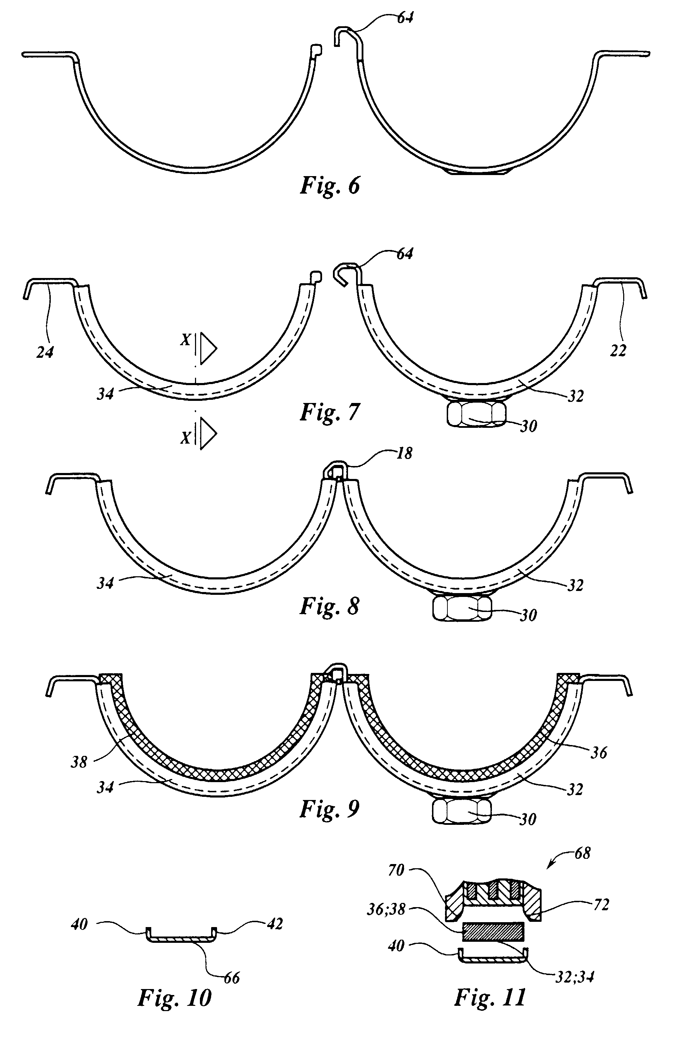

Figs. 6 to 11 show the successive steps for producing a fixing bracket according to Fig. 1.

One starts with two essentially flat strips of material 52 and 54 (see Figs. 4 and 5), the first bracket body part 32 being formed from the strip of material 52, and the second bracket body part 34 being formed from the strip of material 54. The strip of material 52 is provided at the ends with lips 56 and 58, from which the eye 18 and the flange 22 respectively are formed. The strip of material 54 is provided at one end with the slit 60 which runs in the transverse direction, and through which the eye 18 must be hooked, and at the other end is provided with a lip 62, from which the flange 24 is formed.

The two strips of material 52 and 54 are first bent to a preform of the bracket body parts 32 and 34 (Fig. 6), and the lip 56 is also bent into the form of a hook 64.

In the next step the side edges 40 and 42 of the strips of material 52 and 54 are bent over inwards (Fig. 7), during which the U-shaped cross-section shown in Fig. 10 is produced. The side edges 40 and 42 are in this case situated essentially at right angles to the centre part 66 of the bent strip of material. The flanges 22 and 24 are also brought to their final form. These operations produce the two bracket body parts 32 and 34.

The two production steps described above and illustrated in Figs. 6 and 7 can also be carried out in one combined step.

After the formation of the bracket body parts 32 and 34, the nut 30 can be fixed in a known manner, for example by welding, on the bracket body part 32 (Fig. 7).

The two bracket body parts 32 and 34 are then connected to each other through the hook 64 on the bracket body part 32 being hooked through the slit 60 in the bracket body part 34 and formed to the eye 18 (Fig. 8).

Finally, the strip-shaped covering parts 36 and 38 are fitted in the bracket body parts 32 and 34, and the side edges 40 and 42 are bent towards each other, clamping the strip-shaped covering parts (Fig. 9). This last production step is shown diagrammatically in Fig. 11. The strip-shaped covering parts 36 and 38 are fitted in the bracket body parts 32 and 34 by means of a diagrammatically shown die 68 which places the strip-shaped covering parts 36 and 38 in the groove-shaped bracket body parts 32 and 34 and presses the side edges 40 and 42 of the bracket body parts 32 and 34 towards each other by means of the slanting edges 70 and 72.

The fixing bracket for pipes according to the invention can be made from strips of material of relatively low thickness, in which case the rigidity is obtained through the bent-over side edges. The fixing bracket according to the invention is relatively light and can be produced in a relatively simple manner by the method described above.

It is pointed out that the invention is not restricted to an embodiment of a fixing bracket such as that described above. For example, the bracket body can also be in one piece, in which case a weakened point is made in the bracket body at the position of 16, so that the bracket can be bent easily around a pipe. In this embodiment the strip-shaped covering can consist of one part or of two parts.

## Claims

1. Fixing bracket (10) for pipes, comprising an essentially strip-shaped bracket body (32, 34) for embracing a pipe, the longitudinal side edges (40, 42) of the bracket body (32, 34) being bent over towards the inside of the bracket body and towards each other in the transverse direction of the bracket body, and a strip-shaped covering (36, 38) made of elastomeric material and fitted at least on the inside of the bracket body (32, 34), the strip-shaped covering (36, 38) being clamped in the transverse direction between the bent-over side edges (40, 42) of the bracket body (32, 34) **characterized in that** the bent-over side edges (40, 42) of the bracket body (32, 34) are bent towards each other in the transverse direction of the bracket body (32, 34) beyond the position where they form right angles with the centre part of the bracket body.

2. Method for producing a fixing bracket for pipes according to claim 1, **characterized** by the following steps:
a) bending at least one elongated strip of material to a preform of the bracket body,
b) bending over the side edges of the bent strip of material towards the inside of the bracket body, in such a way that after they have been bent over, the side edges are situated essentially at right angles to the centre part of the bent strip of material,
c) fitting the strip-shaped covering between the bent-over side edges on the bracket body thus formed, and
d) bending the bent-over side edges towards each other in the transverse direction of the bracket body, while clamping the strip-shaped covering.

3. Method according to claim 2, **characterized in that** steps a) and b) can be carried out in one combined step.

4. Method according to claim 2, **characterized in that** steps c) and d) can be carried out in one combined step.

## Patentansprüche

1. Befestigungsschelle (10) für Rohre, umfassend einen im Wesentlichen streifenförmigen Schellenkörper (32, 34) zum Umschließen eines Rohrs, wobei die Längsseitenränder (40, 42) des Schellenkörpers (32, 34) zur Innenseite des Schellenkörpers hin und in Querrichtung des Schellenkörpers aufeinanderzu umgebogen sind, sowie eine streifenförmige Auskleidung (36, 38), die aus einem Elastomermaterial hergestellt und zumindest auf der Innenseite des Schellenkörpers (32, 34) angebracht ist, wobei die streifenförmige Auskleidung (36, 38) in Querrichtung zwischen den umgebogenen Seitenrändern (40, 42) des Schellenkörpers (32, 34) festgeklemmt ist, **dadurch gekennzeichnet, dass** die umgebogenen Seitenränder (40, 42) des Schellenkörpers (32, 34) in Querrichtung des Schellenkörpers (32, 34) über die Stellung hinaus aufeinanderzu gebogen sind, in der sie mit dem mittleren Teil des Schellenkörpers rechte Winkel bilden.

2. Verfahren zur Herstellung einer Befestigungsschelle für Rohre nach Anspruch 1, **gekennzeichnet durch** die folgenden Schritte:
a) Biegen von mindestens einem langgestreckten Materialstreifen zu einem Vorformling des Schellenkörpers,
b) Umbiegen der Seitenränder des gebogenen Materialstreifens in einer solchen Weise zur Innenseite des Schellenkörpers hin, dass die Seitenränder, nachdem sie umgebogen worden sind, im Wesentlichen im rechten Winkel zum mittleren Teil des gebogenen Materialstreifens gelegen sind,
c) Einpassen der streifenförmigen Auskleidung zwischen den umgebogenen Seitenrändern auf dem derart gebildeten Schellenkörper, und
d) Biegen der umgebogenen Seitenränder in Querrichtung des Schellenkörpers aufeinanderzu, unter Festklemmen der streifenförmigen Auskleidung.

3. Verfahren nach Anspruch 2, **dadurch gekennzeichnet, dass** die Schritte a) und b) in einem kombinierten Schritt ausgeführt werden können.

4. Verfahren nach Anspruch 2, **dadurch gekennzeichnet, dass** die Schritte c) und d) in einem kombinierten Schritt ausgeführt werden können.

## Revendications

1. Collier de fixation (10) pour tuyaux comprenant un corps (32,34) essentiellement en forme de bande destiné à enserrer un tuyau, les bords latéraux longitudinaux (40,42) du corps de collier (32,34) étant coudés vers l'intérieur du corps du collier et en direction l'un de l'autre dans la direction transversale du corps de collier, et un revêtement en forme de bande (36,38) formé d'un matériau élastomère et installé au moins sur le côté intérieur du corps (32,34) du collier, le revêtement en forme de bande (36,38) étant serré dans la direction transversale entre les bords latéraux coudés (40,42) du corps (32,34) du collier, caractérisé en ce que les bords latéraux coudés (40,42) du corps (32,34) du collier sont rabattus l'un vers l'autre dans la direction transversale du corps (32,34) du collier au-delà de la position dans laquelle ils sont disposés à angle droit par rapport à la partie centrale du corps de collier.

2. Procédé pour fabriquer un collier de fixation pour tuyaux selon la revendication 1, caractérisé par les étapes suivantes consistant à:
a) cintrer au moins une bande allongée d'un matériau pour réaliser une préforme du corps de collier,
b) couder les bords latéraux de la bande de matériau cintrée vers l'intérieur du corps du collier de telle sorte qu'une fois qu'ils ont été coudés, les bords latéraux sont sensiblement perpendiculaires à la partie centrale de la bande cintrée du matériau,
c) insérer le revêtement en forme de bande entre les bords latéraux coudés du corps de collier ainsi formé, et
d) rabattre les bords latéraux coudés en direction l'un de l'autre dans la direction transversale du corps de collier, tout en serrant le revêtement en forme de bande.

3. Procédé selon la revendication 2, caractérisé en ce que les pas a) et b) peuvent être exécutés en une étape combinée.

4. Procédé selon la revendication 2, caractérisé en ce que les pas c) et d) peuvent être exécutés en une étape combinée.
